# EUROPÄISCHE PATENTSCHRIFT

(11) **EP 3 922 689 B1**
(45) Veröffentlichungstag und Bekanntmachung des Hinweises auf die Patenterteilung: **03.01.2024**
(21) Anmeldenummer: 20179687.7
(22) Anmeldetag: 12.06.2020
(51) Int. Cl.: C09D 133/08

(54) **WÄSSRIGER DISPERSIONSBESCHICHTUNGSSTOFF**
AQUEOUS DISPERSION COATING
REVÊTEMENT EN DISPERSION AQUEUSE

(43) Veröffentlichungstag der Anmeldung: 15.12.2021
(73) Patentinhaber: DAW SE, 64372 Ober-Ramstadt (DE)
(72) Erfinder: BRENNER, Thomas, 64367 Mühltal (DE); BEFURT, Thomas, 64372 Ober Ramstadt (DE); LAUTENSCHLÄGER, Oliver, 64354 Reinheim (DE)
(74) Vertreter: Metten, Karl-Heinz

(56) Entgegenhaltungen:
- EP-A1- 3 385 338
- EP-A1- 3 385 339
- EP-A1- 3 456 787

## Beschreibung

Die vorliegende Erfindung betrifft einen wässriger Dispersionsbeschichtungsstoff, eine Beschichtung erhalten mit dem erfindungsgemäßen wässrigen Dispersionsbeschichtungsstoff, ein beschichtetes Substrat, enthaltend die erfindungsgemäße Beschichtung, die Verwendung des erfindungsgemäßen wässrigen Dispersionsbeschichtungsstoffs für die Beschichtung oder Renovierung, insbesondere Renovierung von Dachziegeln von Gebäudefassaden sowie ein Verfahren zur Beschichtung von Substratoberflächen.

Dispersionsfarben sind seit langem bekannt und werden sowohl im Innenbereich wie auch bei Fassaden eingesetzt und haben dabei vielfältigen Anforderungen zu genügen. Sie haben auf unbehandelten mineralischen Flächen wie auch auf Altanstrichen zu haften. In beiden Fällen ist es ein stetes Bestreben, das Erscheinungsbild des ursprünglichen Anstrichs möglichst lange unverändert in hoher Qualität beizubehalten. Dies betrifft sowohl Maßnahmen gegen den Schimmel- und Algenbefall als auch das Kriterium der Farbtonstabilität, beispielsweise gegenüber UV-Strahlung. Das Erreichen der hohen Anforderungen, die an Beschichtungen auf Dispersionsbasis gestellt werden, wird seit einiger Zeit noch dadurch erschwert, dass man idealerweise ohne herkömmliche Konservierungsmittel auskommen soll bzw. von Fall zu Fall auszukommen hat. Dies ist dem Wunsch geschuldet, den Eintrag von aus dem Beschichtungsmaterial ausgewaschenen herkömmlichen Konservierungsmitteln in das Ablaufwasser zu minimieren bzw. zu unterbinden. Diese Anforderungen gelten gleichermaßen für Beschichtungsmaterialien für Dachziegel.

Die WO 2019/043024 A1 betrifft die Verwendung einer flüssigen wässrigen Polymerzusammensetzung, enthaltend a) einen wässrigen Polymerlatex, gebildet aus mindestens zwei voneinander verschiedenen monoethylenisch ungesättigten, nichtionischen Monomeren M1, deren Homopolymere eine theoretische Glasübergangstemperatur Tg(th) von mindestens 25 °C aufweisen, und ii) mindestens zwei voneinander verschiedenen monoethylenisch ungesättigten nichtionische Monomere M2, deren Homopolymere eine theoretische Glasübergangstemperatur Tg(th) von weniger als 25 °C aufweisen, und wobei jedes der Monomere M1 und M2 eine Löslichkeit in entionisiertem Wasser von höchstens 50 g/L besitzt und wobei die Gesamtmenge der Monomere M1 und M2 mindestens 90 Gew.-% zur Gesamtmenge an Monomeren beiträgt, und b) mindestens ein anorganisches teilchenförmiges Material, ausgewählt aus anorganischen Pigmenten und/oder anorganischen Füllstoffen für die Herstellung flexibler Dachbeschichtungen. Diese flüssigen wässrigen Polymerzusammensetzungen sollen lagerstabil, insbesondere gegen Agglomeration und Viskositätsanstieg, sein, schnell abbinden und flexible Dachbeschichtungen mit hoher Zugfestigkeit und guter Elastizität bei gleichzeitig guter Langzeit-UV-, Wasser- und Witterungsbeständigkeit liefern.

Gemäß der DE 10 2007 020 523 A1 können Metallionen enthaltende wässrige Dispersion, die man dadurch erhält, dass eine Metallsalz-Nanogel enthaltende wässrige Dispersion mit einer wässrigen Dispersion eines Polymerisations-, Polykondensations- oder Polyadditionsproduktes abgemischt wird, für die antimikrobielle Beschichtung von Dachziegeln, die zugleich als Sauerstoffbarriere und als Feuchtebarriere dient, eingesetzt werden. Derartige Beschichtungsmassen sind aufwendig zu fertigen und zudem recht kostenintensiv.

Die EP 3 456 787 A1 stellt ab auf eine wässrige Beschichtungsformulierung, insbesondere Dispersionsbeschichtungsformulierung auf Wasserbasis, aufweisend einen pH-Wert im Bereich von 10,0 bis 12,5 und umfassend a) ein polymeres organisches Bindemittel auf Basis einer wässrigen Polymerdispersion, b) einen Rheologiemodifikator, c) ein Dispergier- und/oder Netzmittel, d) ein Pigment und/oder einen Füllstoff, und e) eine Base, insbesondere ein Alkalihydroxid, und erhalten durch Bereitstellen der das polymere organische Bindemittel enthaltenden wässrigen Polymerdispersion a) mit einem Rest(co)monomergehalt in der wässrigen Polymerdispersion a) für jedes das mindestens eine polymere organische Bindemittel bildende (Co)monomer von unter 0,01 Gew.-%, wobei die das polymere organische Bindemittel enthaltende wässrige Polymerdispersion a) im Wesentlichen frei von jeglichen organischen Topfkonservierungsmitteln ist. Derartige wässrige Beschichtungsformulierungen sollen sowohl hinsichtlich Verunreinigungen als auch hinsichtlich des pH-Wertes über längere Zeiträume stabil sein und demgemäß über eine ausreichende Lagerstabilität verfügen.

Aus der EP 3 385 339 A1 gehen wässrige Beschichtungsstoffe hervor, enthaltend a) organische Bindemittel in einer Menge kleiner oder gleich 30 Gew.-% (Feststoffanteil), b) Wasserglas und/oder Kieselsol in einer Menge kleiner 1,5 Gew.-% (Feststoffanteil) und c) 15 bis 70 Gew.-% an mindestens einem Pigment und/oder mindestens einem Füllstoff. Mit diesen wässrigen Beschichtungsstoffen soll ein gutes Deckvermögen bzw. ein guter, dauerhafter Farbeindruck, ermittelt insbesondere anhand der Weiß- und/oder Gelbindex-Werte, einhergehen.

Die EP 3 385 338 A1 beschreibt wässrige Beschichtungsstoffe, insbesondere Dispersionsbeschichtungsstoffe, enthaltend a) organische Bindemittel in einer Menge kleiner 4,0 Gew.-% (Feststoffanteil), b) Wasserglas und/oder Kieselsol in einer Menge bis 3,0 Gew.-%, insbesondere bis 2,0 Gew.-%, (Feststoffanteil) und c) 15 bis 70 Gew.-% an mindestens einem Pigment und/oder mindestens einem Füllstoff. Mit diesen wässrigen Beschichtungsstoffen soll ein relativ kostengünstiger Zugang zu Farbanstrichen gelingen, die sich durch ein hohes Deckvermögen und eine gute Nassabriebbeständigkeit auszeichnen.

Die aus dem Stand der Technik bekannten Lösungen lassen gleichwohl noch Wünsche offen. Der vorliegenden Erfindung lag daher die Aufgabe zugrunde, Beschichtungsstoffe zur Verfügung zu stellen, die nicht mehr mit den genannten Mängeln des Stands der Technik behaftet sind und die insbesondere gestatten, konservierungsmittelfreie Beschichtungen für Substratoberflächen, insbesondere Dachziegel bzw. Dachelemente wie Dachsteinen zur Verfügung zu stellen.

Demgemäß wurde ein wässriger Dachdispersionsbeschichtungsstoff gefunden, gebildet aus oder enthaltend
a) mindestens ein erstes organisches Bindemittel in Form einer wässrigen Dispersion, enthaltend mindestens ein Reinacrylat, und
   mindestens ein zweites organisches Bindemittel in Form einer wässrigen Dispersion, enthaltend Vinylaromat/Acrylat-Copolymere,
   wobei die Gesamtmenge an erstem und zweitem organischen Bindemittel mindestens 18,0 Gew.-% (Feststoffanteil), bezogen auf das Gesamtgewicht des Dispersionsbeschichtungsstoffes, beträgt,
b) mindestens ein pH-Wert-Einstellmittel,
c) mindestens einen Verdicker,
d) mindestens einem Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol, Trialkylsilanol oder beliebigen Mischungen hiervon,
e) Wasserglas und/oder Kieselsol, insbesondere Wasserglas,
f) mindestens ein Netz- und/oder Dispergiermittel und
g) gegebenenfalls mindestens ein Additiv,

wobei der wässrige Beschichtungsstoff einen pH-Wert im Bereich von 8,5 bis 12 aufweist oder auf einen pH-Wert im Bereich von 8,5 bis 12 eingestellt ist und
wobei der Anteil des Reinacrylat-Bindemittels (Feststoffanteil), bezogen auf die Gesamtmenge an organischen Bindemitteln, oberhalb von 60 Gew.-% liegt.

Besonders geeignete Reinacrylat-Bindemittel als erste Bindemittel umfassen, insbesondere in Form wässrigrer Dispersionen auf Basis von, Homo- oder Copolymeren, insbesondere Copolymeren, von Acrylaten und/oder Methacrylaten sowie gegebenenfalls Acryl- und/oder Methacrylsäure. Das Reinacrylat-Bindemittel kann auch in Form von Mischungen der genannten Homo- und/oder Copolymere vorliegen.

Der Anteil des Reinacrylat-Bindemittels (Feststoffanteil), bezogen auf die Gesamtmenge an organischen Bindemitteln, liegt bevorzugt oberhalb von 70 Gew.-% und besonders bevorzugt bei oder oberhalb von 75 Gew.-%.

Das zweite organische Bindemittel wird bevorzugt in Form einer wässrigen Dispersion enthaltend Styrol/Acrylat-Copolymere eingesetzt.

Die Gesamtmenge an organischen Bindemitteln beträgt in bevorzugten Ausgestaltungen mindestens 20,0 Gew.-% (Feststoffanteil) und bevorzugt mindestens 24,0 Gew.-%, jeweils bezogen auf das Gesamtgewicht des Dispersionsbeschichtungsstoffes.

Das pH-Wert-Einstellmittel wird bevorzugt ausgewählt aus der Gruppe bestehend aus Alkalihydroxiden, Erdalkalihydroxiden, Ammoniak, Aminverbindungen und beliebigen Mischungen hiervon. Besonders bevorzugt werden für das pH-Wert-Einstellmittel Alkalihydroxid eingesetzt und unter diesen insbesondere Kaliumhydroxid.

Geeignete Verdicker können ausgewählt werden aus der Gruppe bestehend aus Polyacrylat-Verdickern, insbesondere HASE-Polyacrylat-Verdickern, Polyurethan-Verdickern, Polyharnstoff-Verdickern, modifizierten Polyharnstoff-Verdickern, Polysaccharid-Verdickern, Polyvinylalkohol-Verdickern, Polyetherpolyol-Verdickern, Schichtsilikat-Verdickern, insbesondere organisch modifizierten Schichtsilikaten, und beliebigen Mischungen hiervon. Unter den Verdickern wird bevorzugt auf Polysaccharid-Verdicker zurückgegriffen, wobei unter diesen Cellulose-Verdicker, insbesondere auf Basis von Hydroxyethylcellulose, Methylhydroxyethylcellulose und/oder Methylcellulose besonders bevorzugt sind.

Die Komponente d) der erfindungsgemäßen wässrigen Dispersionsbeschichtungsstoffe umfasst vorzugsweise wasserlösliche Alkylsilikonate, insbesondere Kaliummethylsilikonat.

Und für das Wasserglas wird bevorzugt Kalium-Wasserglas und/oder Lithium-Wasserglas eingesetzt, wobei Lithium-Wasserglas besonders bevorzugt ist.

Besonders geeignete Netz- und/oder Dispergiermittel können ausgewählt werden aus der Gruppe bestehend aus Polycarboxylaten, insbesondere Salze von Polyacrylsäuren wie Natrium-, Kalium- oder Ammoniumpolyacrylate, Polyphosphaten, insbesondere lineare Polyphosphate und/oder zyklische Metaphosphate, Polyetherphosphaten, Polycarbonsäurepolymeren, Acrylblockcopolymeren, insbesondere CFRP-basierte Acrylblockcopolymere, EO/PO-Blockcopolymeren, vorzugsweise Ethylendiamin-EO/PO-Blockcopolymere, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiolethoxylaten, Fluortensiden und beliebigen Mischungen hiervon.

Besonders geeignete Additive g) können ausgewählt werden aus der Gruppe bestehend aus Entschäumern, Flammschutzmitteln, Hydrophobierungsmitteln, Schichtsilikaten, organisch modifizierten Schichtsilikaten, Puffersubstanzen, UV-Absorbern, und Mischungen dieser Verbindungen.

Die erfindungsgemäßen wässrigen Dispersionsbeschichtungsstoffe umfassen in bevorzugten Ausgestaltungen ferner
h) Pigmente, insbesondere in Form einer Pigmentpaste,
i) Füllstoffe,
j) amorphe Polyphosphate, bevorzugt Natriumpolyphosphat wie Natriumhexametaphosphat,
k) Wasserglas-Stabilisatoren,
l) ein Lösemittel und/oder
m) Oberflächenadditive, insbesondere Silikonoberflächenadditive, beispielsweise polyethermodifizierte Siloxane, wie polyethermodifiziertes Polymethylalkylsiloxan, oder Silikonpolyether-Copolymere.

Der Wasserglas-Stabilisator stellt bevorzugt eine quartäre Ammoniumverbindung und/oder ein Aminderivat dar. Dabei können geeignete Aminderivate ausgewählt werden aus der Gruppe bestehend aus Alkylendiamintetra-carboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxylier-tem, (N,N')-Tetraalkylalkylendiamin, insbesondere (N,N')-Tetraalkylethylendiamin, und beliebigen Mischungen hiervon.

Die erfindungsgemäßen wässrigen Dispersionsbeschichtungsstoffe verfügen in besonders geeigneten Ausführungsformen über einen pH-Wert größer oder gleich 9,0, vorzugsweise im Bereich von 10,0 bis 12,0 und besonders bevorzugt im Bereich von 10,5 bis 11,5. Alternativ können die erfindungsgemäßen wässrigen Dispersionsbeschichtungsstoffe auch auf einen pH-Wert größer oder gleich 9,0, vorzugsweise im Bereich von 10,0 bis 12,0 und besonders bevorzugt im Bereich von 10,5 bis 11,5 eingestellt werden.

Für das Lösemittel der wässrigen Dispersionsbeschichtungsstoffen komme in geeigneten Ausführungsformen aromatenfreies Testbenzin, Glykole, insbesondere Butyldiglykol, und/oder Polyalkylenglykole, insbesondere Polyethylenglykole, zum Einsatz.

Als besonders vorteilhaft haben sich dabei solche erfindungsgemäßen wässrigen Dispersionsbeschichtungsstoffe erwiesen, die im Wesentlichen frei von Topfkonservierungsmitteln und/oder von Filmkonservierungsmitteln, bevorzugt im Wesentlichen frei von Filmkonservierungsmitteln, vorzugsweise im Wesentlichen frei von Topf- und Filmkonservierungsmitteln, oder auch im Wesentlichen frei von jeglichen organischen Konservierungsmitteln sind.

In einer zweckmäßigen Ausführungsform sind in den erfindungsgemäßen Dispersionsbeschichtungsstoffen, die im Sinne der Erfindung im Wesentlichen frei von Topfkonservierungsmitteln sind, bezogen auf das jeweilige Topfkonservierungsmittel, bevorzugt bezogen auf sämtliche in dem erfindungsgemäßen Dispersionsbeschichtungsstoff vorliegenden Topfkonservierungsmittel, diese Topfkonservierungsmittel in Mengen von nicht mehr als 100 ppm, vorzugsweise von nicht mehr als 50 ppm, besonders bevorzugt von nicht mehr als 20 ppm und ganz besonders bevorzugt von nicht mehr als 10 ppm enthalten.

In einer besonders zweckmäßigen Ausführungsform sind in den erfindungsgemäßen Dispersionsbeschichtungsstoffen, die im Sinne der Erfindung im Wesentlichen frei von Filmkonservierungsmitteln sind, bezogen auf das jeweilige Filmkonservierungsmittel, bevorzugt bezogen auf sämtliche in dem erfindungsgemäßen Dispersionsbeschichtungsstoff vorliegenden Filmkonservierungsmittel, diese Filmkonservierungsmittel in Mengen von nicht mehr als 100 ppm, vorzugsweise von nicht mehr als 50 ppm, besonders bevorzugt von nicht mehr als 20 ppm und ganz besonders bevorzugt von nicht mehr als 10 ppm enthalten.

In einer besonders bevorzugten Ausführungsform sind in den erfindungsgemäßen Dispersionsbeschichtungsstoffen, die im Sinne der Erfindung im Wesentlichen frei von Film- und Topfkonservierungsmitteln sind, bezogen auf das jeweilige Film- und Topfkonservierungsmittel, bevorzugt bezogen auf sämtliche in dem erfindungsgemäßen Dispersionsbeschichtungsstoff vorliegenden Film- und Topfkonservierungsmittel, diese Film- und Topfkonservierungsmittel in Mengen von nicht mehr als 100 ppm, vorzugsweise von nicht mehr als 50 ppm, besonders bevorzugt von nicht mehr als 20 ppm und ganz besonders bevorzugt von nicht mehr als 10 ppm enthalten.

Filmkonservierungsmittel, die häufig in gattungsgemäßen wässrigen Dispersionsbeschichtungsstoffen eingesetzt werden, sind z.B. Diuron, Carbendazim, Octylisothiazolinon, Dichlorooctylisothiazolinon, Terbutryn, Isoproturon, lodpropylbutylcarbamat und/oder Zinkpyrithion. Geeignete erfindungsgemäße wässrige Dispersionsbeschichtungsstoffe sind demgemäß vorzugsweise im Wesentlichen frei von Diuron, Carbendazim, Octylisothiazolinon, Dichlorooctylisothiazolinon, Terbutryn, Isoproturon, lodpropylbutylcarbamat und/oder, insbesondere und, Zinkpyrithion.

In einer besonders geeigneten Ausführungsform sind in den erfindungsgemäßen Dispersionsbeschichtungsstoffen, die im Sinne der Erfindung im Wesentlichen frei von Diuron, Carbendazim, Octylisothiazolinon, Dichlorooctylisothiazolinon, Terbutryn, Isoproturon, Iodpropylbutylcarbamat und/oder Zinkpyrithion sind, bezogen auf das jeweilige Filmkonservierungsmittel, bevorzugt bezogen auf sämtliche unter den vorangehend genannten Filmkonservierungsmitteln in dem erfindungsgemäßen Dispersionsbeschichtungsstoff vorliegenden vorangehend genannten Filmkonservierungsmittel, diese Filmkonservierungsmittel in Mengen von nicht mehr als 100 ppm, vorzugsweise von nicht mehr als 50 ppm, besonders bevorzugt von nicht mehr als 20 ppm und ganz besonders bevorzugt von nicht mehr als 10 ppm enthalten.

Erfindungsgemäße wässrige Dispersionsbeschichtungsstoffe zeichnen sich demgemäß in einer besonders bevorzugten Ausführungsform auch dadurch aus, dass in diesen keine Topfkonservierungsmittel und/oder keine Filmkonservierungsmittel, insbesondere keine Filmkonservierungsmittel und besonders bevorzugt keine organischen Konservierungsmittel, vorliegen. Besonders geeignete erfindungsgemäße wässrige Dispersionsbeschichtungsstoffe enthalten demgemäß kein Diuron, Carbendazim, Octylisothiazolinon, Dichlorooctylisothiazolinon, Terbutryn, Isoproturon, Iodpropylbutylcarbamat und/oder Zinkpyrithion, bevorzugt kein Diuron, Carbendazim, Octylisothiazolinon, Dichlorooctylisothiazolinon, Terbutryn, Isoproturon, Iodpropylbutylcarbamat und Zinkpyrithion.

Für die in den erfindungsgemäßen wässrigen Dispersionsbeschichtungsstoffen verwendeten Pigmente kann man auswählen aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat sowie einer beliebigen Mischung hiervon.

In besonders geeigneten Ausführungsformen der erfindungsgemäßen wässrigen Dispersionsbeschichtungsstoffe enthalten diese
15 bis 35 Gew.-%, vorzugsweise 18 bis 30 Gew.-% und besonders bevorzugt 20 bis 25 Gew.-%, an Komponente a),
0,01 bis 1,0 Gew.-%, vorzugsweise 0,08 bis 0,5 Gew.-% und besonders bevorzugt 0,1 bis 0,3 Gew.-%, an Komponente b),
0,05 bis 1,5 Gew.-%, vorzugsweise 0,1 bis 1,0 Gew.-% und besonders bevorzugt 0,2 bis 0,5 Gew.-%, an Komponente c),
0,05 bis 2,0 Gew.-%, vorzugsweise 0,1 bis 1,0 Gew.-% und besonders bevorzugt 0,2 bis 0,8 Gew.-%, an Komponente d),
0,005 bis 4 Gew.-%, vorzugsweise 0,01 bis 2,5 Gew.-% und besonders bevorzugt 0,05 bis 1,5 Gew.-%, an Komponente e),
0,001 bis 2,0 Gew.-%, vorzugsweise 0,01 bis 1,0 Gew.-% und besonders bevorzugt 0,05 bis 0,5 Gew.-%, an Komponente f),
0,001 bis 5 Gew.-%, vorzugsweise 0,005 bis 3,5 Gew.-% und besonders bevorzugt 0,01 bis 2,5 Gew.-%, an Komponente g),
0 bis 25 Gew.-%, vorzugsweise 1 bis 20 Gew.-% und besonders bevorzugt 5 bis 15 Gew.-%, an Komponente h),
0 bis 25 Gew.-%, vorzugsweise 1 bis 20 Gew.-% und besonders bevorzugt 5 bis 15 Gew.-%, an Komponente i),
0 bis 2 Gew.-%, vorzugsweise 0,001 bis 1,5 Gew.-% und besonders bevorzugt 0,1 bis 1,0 Gew.-%, an Komponente j),
0 bis 4 Gew.-%, vorzugsweise 0,01 bis 2,5 Gew.-% und besonders bevorzugt 0,1 bis 1,0 Gew.-%, an Komponente k),
0 bis 10 Gew.-%, vorzugsweise 0,05 bis 5 Gew.-% und besonders bevorzugt 1,0 bis 4,0 Gew.-%, an Komponente 1),
0 bis 3 Gew.-%, vorzugsweise 0,001 bis 2,0 Gew.-% und besonders bevorzugt 0,1 bis 1,0 Gew.-%, an Komponente m), und/oder, insbesondere und,
40 bis 80 Gew.-%, insbesondere 50 bis 70 Gew.-% Wasser,
wobei die den wässrigen Dispersionsbeschichtungsstoff bildenden Komponenten sich stets zu 100,0 Gew.-% ergänzen.

Der erfindungsgemäße wässrige Dachdispersionsbeschichtungsstoff stellt zweckmäßigerweise einen Dachsteindispersionsbeschichtungsstoff, insbesondere Betondachsteindispersionsbeschichtungsstoff, oder einen Dachziegeldispersionsbeschichtungsstoff dar, wobei Betondachsteindispersionsbeschichtungsstoffe bevorzugt sind.

Die der Erfindung zugrunde liegende Aufgabe wird des Weiteren gelöst durch eine Beschichtung, erhalten oder erhältlich mit dem erfindungsgemäßen wässrigen Dispersionsbeschichtungsstoff. Diese Beschichtung stellt in besonders geeigneten Ausführungsformen eine Dachflächenbeschichtung, bevorzugt eine Dachstein-, Betondachstein- und/oder Dachziegelbeschichtung und besonders bevorzugt eine Betondachsteinbeschichtung, dar.

Mit den erfindungsgemäßen Beschichtungen können insbesondere auch solche erhalten erden, die einen Glanz der Kategorie "glänzend" ermittelt gemäß DIN EN ISO 2813:2014 (Ausgabedatum: 2015-02) bei einem Messwinkel von 60° und eingestuft gemäß DIN EN 13300 (Ausgabe 11.2002) aufweisen.

Die der Erfindung zugrunde liegende Aufgabe wird des Weiteren gelöst durch ein beschichtetes Substrat, erhalten durch Behandeln eines Substrats mit dem erfindungsgemäßen wässrigen Dispersionsbeschichtungsstoff. Für das beschichtete Substrat wird bevorzugt als Substrat eine Dachziegel und/oder ein Dachstein, insbesondere Betondachstein, eingesetzt.

Demgemäß eignen sich die erfindungsgemäßen wässrigen Dispersionsbeschichtungsstoffe für die Beschichtung von Substratoberflächen, insbesondere von Gebäudefassaden oder Dachziegeln und/oder von Dachsteinen, insbesondere Betondachsteinen, Bevorzugt werden erfindungsgemäßen wässrigen Dispersionsbeschichtungsstoffe für die Renovierung von Dachziegeln, Dachsteinen, insbesondere Betondachsteinen, oder von Dachflächen gebildet aus Dachziegeln und/oder Dachsteinen, insbesondere Betondachsteinen, eingesetzt.

Die der Erfindung zugrunde liegende Aufgabe wird des Weiteren gelöst durch ein Verfahren zur Beschichtung oder Renovierung von Substratoberflächen, insbesondere von Gebäudefassaden oder von Dachflächen oder Bestandteilen hiervon, bevorzugt von Dachziegeln und/oder Dachsteinen, insbesondere Betondachsteinen, besonders bevorzugt von Betondachsteinen, umfassend die Schritte
i) Zurverfügungstellung eines erfindungsgemäßen wässrigen Dispersionsbeschichtungsstoffs,
ii) Zurverfügungstellung eines Substrats mit einer beschichtbaren Oberfläche und
iii) Beaufschlagen der beschichtbaren Oberfläche des Substrats mit dem wässrigen Dispersionsbeschichtungsstoff.

Vorzugsweise wird hierbei der wässrige Dispersionsbeschichtungsstoff mittels eines Airless-Spritzgeräts auf die beschichtbare Oberfläche des Substrats aufgebracht. Hierbei können z.B. Applikationsdrücke von bis zu 150 bar zur Anwendung gelangen, wobei insbesondere auf Düsen mit einem Durchmesser im Bereich von 0,5 mm bis 0,7 mm (vorzugsweise auch im Bereich von 0,021 bis 0,025 Inch) zurückgegriffen wird.

Der vorliegenden Erfindung liegt die überraschende Erkenntnis zugrunde, dass sich mit den erfindungsgemäßen Beschichtungsmassen Dachziegel bzw. Dachflächen wirksam und dauerhaft unter Erhalt eines optisch sehr ansprechenden Erscheinungsbildes renovieren lassen, ohne ins Ablaufwasser zu gelangen. Überraschend wurde gefunden, dass dieses durch Verwendung zweier aufeinander abgestimmter organischer Bindemittel in Form wässriger Dispersionen unter gleichzeitiger Anwesenheit eines anorganischen Bindemittels gelingt. Auch gelingt es mit den erfindungsgemäßen Beschichtungsmassen, dauerhaft einen sehr hohen pH-Wert aufrechtzuerhalten. Die erfindungsgemäßen Beschichtungsmassen kommen vorteilhafter Weise völlig ohne herkömmliche Konservierungsmittel aus und zeigen gleichwohl keine ausgeprägte Tendenz zur Schimmel- und/oder Algenbildung.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässriger Dachdispersionsbeschichtungsstoff, gebildet aus oder enthaltend
a) ein erstes organisches Bindemittel in Form einer wässrigen Dispersion, enthaltend mindestens ein Reinacrylat, und
ein zweites organisches Bindemittel in Form einer wässrigen Dispersion, enthaltend Vinylaromat/Acrylat-Copolymere,
wobei die Gesamtmenge an erstem und zweitem organischen Bindemittel mindestens 18,0 Gew.-% (Feststoffanteil), bezogen auf das Gesamtgewicht des Dispersionsbeschichtungsstoffes, beträgt,
b) mindestens ein pH-Wert-Einstellmittel,
c) mindestens einen Verdicker,
d) mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol, Trialkylsilanol oder beliebige Mischungen hiervon,
e) Wasserglas und/oder Kieselsol, insbesondere Wasserglas,
f) mindestens ein Netz- und/oder Dispergiermittel und
g) gegebenenfalls mindestens ein Additiv,
wobei der wässrige Beschichtungsstoff einen pH-Wert im Bereich von 8,5 bis 12 aufweist oder auf einen pH-Wert im Bereich von 8,5 bis 12 eingestellt ist und wobei der Anteil des Reinacrylat-Bindemittels (Feststoffanteil), bezogen auf die Gesamtmenge an organischen Bindemitteln, oberhalb von 60 Gew.-% liegt.

2. Wässriger Dispersionsbeschichtungsstoff nach Anspruch 1, **dadurch gekennzeichnet, dass**
das zweite organische Bindemittel in Form einer wässrigen Dispersion auf Styrol/Acrylat-Copolymeren basiert.

3. Wässriger Dispersionsbeschichtungsstoff nach Anspruch 1 oder 2, **dadurch gekennzeichnet, dass**
der Anteil des Reinacrylat-Bindemittels (Feststoffanteil), bezogen auf die Gesamtmenge an organischen Bindemitteln, oberhalb von 70 Gew.-% und bevorzugt bei oder oberhalb von 75 Gew.-%, liegt.

4. Wässriger Dispersionsbeschichtungsstoff nach einem der vorangehenden Ansprüche, **dadurch gekennzeichnet, dass**
die Gesamtmenge an organischen Bindemitteln mindestens 20,0 Gew.-% (Feststoffanteil) und bevorzugt mindestens 24,0 Gew.-%, jeweils bezogen auf das Gesamtgewicht des Dispersionsbeschichtungsstoffes, beträgt.

5. Wässriger Dispersionsbeschichtungsstoff nacheinem der vorangehenden Ansprüche, **dadurch gekennzeichnet, dass**
das pH-Wert-Einstellmittel ein Alkalihydroxid darstellt, insbesondere Kaliumhydroxid, und/oder dass
die Komponente d) das wasserlösliche Alkylsilikonat, insbesondere Kaliummethylsilikonat, darstellt oder umfasst.

6. Wässriger Dispersionsbeschichtungsstoff nach einem der vorangehenden Ansprüche, ferner umfassend
h) Pigmente, insbesondere in Form einer Pigmentpaste,
i) Füllstoffe,
j) amorphe Polyphosphate, bevorzugt Natriumpolyphosphat wie Natriumhexametaphosphat,
k) Wasserglas-Stabilisatoren,
l) ein Lösemittel und/oder
m) Oberflächenadditive, insbesondere Silikonoberflächenadditive, beispielsweise polyethermodifizierte Siloxane, wie polyethermodifiziertes Polymethylalkylsiloxan, oder Silikonpolyether-Copolymere.

7. Wässriger Dispersionsbeschichtungsstoff nach Anspruch 6, **dadurch gekennzeichnet, dass**
der Wasserglas-Stabilisator eine quartäre Ammoniumverbindung und/oder ein Aminderivat umfasst, wobei
das Aminderivat insbesondere ausgewählt ist aus der Gruppe bestehend aus Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxylat, insbesondere Ethylendiamintetraacetat, alkoxyliertes, insbesondere propoxyliertes Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon.

8. Wässriger Dispersionsbeschichtungsstoff nach einem der vorangehenden Ansprüche, **dadurch gekennzeichnet, dass**
dessen pH-Wert größer oder gleich 9,0, vorzugsweise im Bereich von 10,0 bis 12,0 und besonders bevorzugt im Bereich von 10,5 bis 11,5, ist oder auf einen pH-Wert größer oder gleich 9,0, vorzugsweise im Bereich von 10,0 bis 12,0 und besonders bevorzugt im Bereich von 10,5 bis 11,5 eingestellt ist.

9. Wässriger Dispersionsbeschichtungsstoff nach einem der vorangehenden Ansprüche, **dadurch gekennzeichnet, dass**
dieser im Wesentlichen frei von Topfkonservierungsmitteln, vorzugsweise frei von Topf- und Filmkonservierungsmitteln, und besonders bevorzugt frei von Konservierungsmitteln ist.

10. Wässriger Dispersionsbeschichtungsstoff nach einem der vorangehenden Ansprüche, enthaltend
15 bis 35 Gew.-%, vorzugsweise 18 bis 30 Gew.-% und besonders bevorzugt 20 bis 25 Gew.-%, an Komponente a),
0,01 bis 1,0 Gew.-%, vorzugsweise 0,08 bis 0,5 Gew.-% und besonders bevorzugt 0,1 bis 0,3 Gew.-%, an Komponente b),
0,05 bis 1,5 Gew.-%, vorzugsweise 0,1 bis 1,0 Gew.-% und besonders bevorzugt 0,2 bis 0,5 Gew.-%, an Komponente c),
0,05 bis 2,0 Gew.-%, vorzugsweise 0,1 bis 1,0 Gew.-% und besonders bevorzugt 0,2 bis 0,8 Gew.-%, an Komponente d),
0,005 bis 4 Gew.-%, vorzugsweise 0,01 bis 2,5 Gew.-% und besonders bevorzugt 0,05 bis 1,5 Gew.-%, an Komponente e),
0,001 bis 2,0 Gew.-%, vorzugsweise 0,01 bis 1,0 Gew.-% und besonders bevorzugt 0,05 bis 0,5 Gew.-%, an Komponente f),
0,001 bis 5 Gew.-%, vorzugsweise 0,005 bis 3,5 Gew.-% und besonders bevorzugt 0,01 bis 2,5 Gew.-%, an Komponente g),
0 bis 25 Gew.-%, vorzugsweise 1 bis 20 Gew.-% und besonders bevorzugt 5 bis 15 Gew.-%, an Komponente h),
0 bis 25 Gew.-%, vorzugsweise 1 bis 20 Gew.-% und besonders bevorzugt 5 bis 15 Gew.-%, an Komponente i),
0 bis 2 Gew.-%, vorzugsweise 0,001 bis 1,5 Gew.-% und besonders bevorzugt 0,1 bis 1,0 Gew.-%, an Komponente j),
0 bis 4 Gew.-%, vorzugsweise 0,01 bis 2,5 Gew.-% und besonders bevorzugt 0,1 bis 1,0 Gew.-%, an Komponente k),
0 bis 10 Gew.-%, vorzugsweise 0,05 bis 5 Gew.-% und besonders bevorzugt 1,0 bis 4,0 Gew.-%, an Komponente I),
0 bis 3 Gew.-%, vorzugsweise 0,001 bis 2,0 Gew.-% und besonders bevorzugt 0,1 bis 1,0 Gew.-%, an Komponente m), und/oder
40 bis 80 Gew.-%, insbesondere 50 bis 70 Gew.-% Wasser,
wobei die den wässrigen Dispersionsbeschichtungsstoff bildenden Komponenten sich stets zu 100,0 Gew.-% ergänzen.

11. Wässriger Dispersionsbeschichtungsstoff nach einem der vorangehenden Ansprüche, **dadurch gekennzeichnet, dass**
dieser ein Dachstein-, Betondachstein- und/oder Dachziegeldispersionsbeschichtungsstoff, bevorzugt Betondachsteindispersionsbeschichtungsstoff, ist.

12. Beschichtung, erhalten oder erhältlich
mit dem wässrigen Dispersionsbeschichtungsstoff nach einem der vorangehenden Ansprüche.

13. Beschichtung nach Anspruch 12, **dadurch gekennzeichnet, dass**
diese eine Dachflächenbeschichtung, bevorzugt eine Dachstein-, Betondachstein- und/oder Dachziegelbeschichtung und besonders bevorzugt eine Betondachsteinbeschichtung, darstellt.

14. Beschichtung nach Anspruch 12 oder 13, **dadurch gekennzeichnet, dass**
diese einen Glanz der Kategorie "glänzend" ermittelt gemäß DIN EN ISO 2813:2014 (Ausgabedatum: 2015-02) bei einem Messwinkel von 60° und eingestuft gemäß DIN EN 13300 (Ausgabe 11.2002) aufweist.

15. Beschichtetes Substrat, erhalten durch
Behandeln eines Substrats mit dem wässrigen Dispersionsbeschichtungsstoff nach einem der Ansprüche 1 bis 11.

16. Beschichtetes Substrat nach Anspruch 15, **dadurch gekennzeichnet, dass** das Substrat einen Dachziegel oder einen Dachstein, insbesondere Betondachstein, darstellt.

17. Verwendung des wässrigen Dispersionsbeschichtungsstoffs nach einem der Ansprüche 1 bis 11 für die Beschichtung oder Renovierung von Substratoberflächen, insbesondere von Gebäudefassaden oder von Dachflächen, bevorzugt von Dachziegeln und/ oder Dachsteinen, insbesondere Betondachsteinen, besonders bevorzugt von Betondachsteinen.

18. Verfahren zur Beschichtung von Substratoberflächen, bevorzugt von Gebäudefassaden oder Dachflächen, besonders bevorzugt von Dachziegeln oder Dachsteinen, insbesondere Betondachsteinen, umfassend die Schritte
i) Zurverfügungstellung eines wässrigen Dispersionsbeschichtungsstoffs nach einem der Ansprüche 1 bis 11,
ii) Zurverfügungstellung eines Substrats mit einer beschichtbaren Oberfläche und
iii) Beaufschlagen der beschichtbaren Oberfläche des Substrats mit dem wässrigen Dispersionsbeschichtungsstoff, insbesondere mittels eines Airless-Spritzgeräts.

## Claims

1. An aqueous roof dispersion coating material formed of or containing
a) a first organic binder in the form of an aqueous dispersion containing at least one pure acrylate, and
a second organic binder in the form of an aqueous dispersion,
containing vinyl aromatic/acrylate copolymers,
wherein the total amount of first and second organic binder is at least 18.0 wt.% (solids content), based on the total weight of the dispersion coating material,
b) at least one pH adjusting agent,
c) at least one thickener,
d) at least one alkyl alkoxysilane, alkyl alkoxysiloxane, water-soluble alkyl siliconate, in particular potassium methyl siliconate, monoalkyl silanetriol, dialkyl silanediol, trialkyl silanol, alkali salt of monoalkyl silanetriol, in particular potassium methyl silanetriolate and/or potassium ethyl silanetriolate, dialkyl silanediol, trialky Isilanol or any mixtures thereof,
e) water glass and/or silica sol, in particular water glass,
f) at least one wetting and/or dispersing agent, and
g) optionally at least one additive,
wherein the aqueous coating material has a pH in the range from 8.5 to 12 or is adjusted to a pH in the range from 8.5 to 12, and
wherein the content of the pure acrylate binder (solids content), based on the total amount of organic binders, is above 60 wt.%.

2. The aqueous dispersion coating material according to claim 1, **characterized in that** the second organic binder in the form of an aqueous dispersion is based on styrene/acrylate copolymers.

3. The aqueous dispersion coating material according to claim 1 or 2, **characterized in that**
the content of the pure acrylate binder (solids content), based on the total amount of organic binders, is above 70 wt.% and preferably at or above 75 wt.%.

4. The aqueous dispersion coating material according to any of the preceding claims, **characterized in that**
the total amount of organic binders is at least 20.0 wt.% (solids content) and preferably at least 24.0 wt.%, in each case based on the total weight of the dispersion coating material.

5. The aqueous dispersion coating material according to any of the preceding claims, **characterized in that**
the pH adjusting agent is an alkali hydroxide, in particular potassium hydroxide, and/or **in that**
the component d) is or comprises the water-soluble alkyl siliconate, in particular potassium methyl siliconate.

6. The aqueous dispersion coating material according to any of the preceding claims, further comprising
h) pigments, in particular in the form of a pigment paste,
i) fillers,
j) amorphous polyphosphates, preferably sodium polyphosphate such as sodium hexametaphosphate,
k) water glass stabilizers,
l) a solvent, and/or
m) surface additives, in particular silicone surface additives, for example polyether-modified siloxanes, such as polyether-modified polymethyl alkyl siloxane, or silicone polyether copolymers.

7. The aqueous dispersion coating material according to claim 6, **characterized in that** the water glass stabilizer comprises a quaternary ammonium compound and/or an amine derivative, wherein
the amine derivative is in particular selected from the group consisting of alkylene diamine tetracarboxylic acid, in particular ethylene diamine tetraacetic acid, salts of alkylene diamine tetracarboxylic acid, in particular salts of ethylene diamine tetraacetic acid, alkylene diamine tetracarboxylate, in particular ethylene diamine tetraacetate, alkoxylated, in particular propoxylated, tetraalkyl alkylene diamine, in particular tetraalkyl ethylene diamine, tetrahydroxy alkyl alkylene diamine, in particular N,N,N',N'-tetrakis-(2-hydroxypropyl)-ethylene diamine, alkoxylated, in particular ethoxylated or propoxylated, (N,N')-tetraalkyl alkylene diamine, in particular (N,N')-tetraalkyl ethylene diamine, and any mixtures thereof.

8. The aqueous dispersion coating material according to any of the preceding claims, **characterized in that**
the pH thereof is greater than or equal to 9.0, preferably in the range from 10.0 to 12.0 and particularly preferably in the range from 10.5 to 11.5, or is adjusted to a pH greater than or equal to 9.0, preferably in the range from 10.0 to 12.0 and particularly preferably in the range from 10.5 to 11.5.

9. The aqueous dispersion coating material according to any of the preceding claims, **characterized in that**
it is substantially free of in-can preservatives, preferably free of in-can and film preservatives, and particularly preferably free of preservatives.

10. The aqueous dispersion coating material according to any of the preceding claims, containing
15 to 35 wt.%, preferably 18 to 30 wt.% and particularly preferably 20 to 25 wt.%, of component a),
0.01 to 1.0 wt.%, preferably 0.08 to 0.5 wt.% and particularly preferably 0.1 to 0.3 wt.%, of component b),
0.05 to 1.5 wt.%, preferably 0.1 to 1.0 wt.% and particularly preferably 0.2 to 0.5 wt.%, of component c),
0.05 to 2.0 wt.%, preferably 0.1 to 1.0 wt.% and particularly preferably 0.2 to 0.8 wt.%, of component d),
0.005 to 4 wt.%, preferably 0.01 to 2.5 wt.% and particularly preferably 0.05 to 1.5 wt.%, of component e),
0.001 to 2.0 wt.%, preferably 0.01 to 1.0 wt.% and particularly preferably 0.05 to 0.5 wt.%, of component f),
0.001 to 5 wt.%, preferably 0.005 to 3.5 wt.% and particularly preferably 0.01 to 2.5 wt.%, of component g),
0 to 25 wt.%, preferably 1 to 20 wt.% and particularly preferably 5 to 15 wt.%, of component h),
0 to 25 wt.%, preferably 1 to 20 wt.% and particularly preferably 5 to 15 wt.%, of component i),
0 to 2 wt.%, preferably 0.001 to 1.5 wt.% and particularly preferably 0.1 to 1.0 wt.%, of component j),
0 to 4 wt.%, preferably 0.01 to 2.5 wt.% and particularly preferably 0.1 to 1.0 wt.%, of component k),
0 to 10 wt.%, preferably 0.05 to 5 wt.% and particularly preferably 1.0 to 4.0 wt.%, of component I),
0 to 3 wt.%, preferably 0.001 to 2.0 wt.% and particularly preferably 0.1 to 1.0 wt.%, of component m), and/or
40 to 80 wt.%, in particular 50 to 70 wt.%, water,
wherein the components forming the aqueous dispersion coating material always add up to 100.0 wt.%.

11. The aqueous dispersion coating material according to any of the preceding claims, **characterized in that**
it is a roof stone, concrete roof stone and/or roof tile dispersion coating material, preferably concrete roof stone dispersion coating material.

12. A coating, obtained or obtainable
with the aqueous dispersion coating material according to any of the preceding claims.

13. The coating according to claim 12, **characterized in that**
it is a roof surface coating, preferably a roof stone, concrete roof stone and/or roof tile coating and particularly preferably a concrete roof stone coating.

14. The coating according to claim 12 or 13, **characterized in that** it has a gloss of the category "glossy" determined according to DIN EN ISO 2813:2014 (date of issue: 2015-02) at a measurement angle of 60° and graded according to DIN EN 13300 (issue 11.2002).

15. A coated substrate, obtained by
treating a substrate with the aqueous dispersion coating material according to any of claims 1 to 11.

16. The coated substrate according to claim 15, **characterized in that** the substrate is a roof tile or a roof stone, in particular concrete roof stone.

17. Use of the aqueous dispersion coating material according to any of claims 1 to 11 for the coating or renovation of substrate surfaces, in particular of building facades or of roof surfaces, preferably of roof tiles and/or roof stones, in particular concrete roof stones, particularly preferably of concrete roof stones.

18. Method for the coating of substrate surfaces, preferably of building facades or roof surfaces, particularly preferably of roof tiles or roof stones, in particular concrete roof stones, comprising the steps of
i) providing an aqueous dispersion coating material according to any of claims 1 to 11,
ii) providing a substrate having a coatable surface, and
iii) applying the aqueous dispersion coating material to the coatable surface of the substrate, in particular by means of an airless sprayer.

## Revendications

1. Matériau de revêtement en dispersion aqueuse pour toiture, formé de ou contenant
a) un premier liant organique sur la base d'une dispersion aqueuse, contenant au moins un acrylate pur, et
un deuxième liant organique sur la base d'une dispersion aqueuse, contenant des copolymères vinylaromatique/acrylate,
la quantité totale du premier et du deuxième liant organique étant d'au moins 18,0 % en poids (teneur en matières solides), par rapport au poids total du matériau de revêtement en dispersion,
b) au moins un agent d'ajustement du pH,
c) au moins un épaississant,
d) au moins un alkylalcoxysilane, alkylalcoxysiloxane, alkylsiliconate soluble dans l'eau, en particulier méthylsiliconate de potassium, monoalkylsilanetriol, dialkylsilanediol, trialkylsilanol, sel alcalin de monoalkylsilanetriol, en particulier méthylsilanetriolate de potassium et/ou éthylsilanetriolate de potassium, dialkylsilanediol, trialkylsilanol ou des mélanges quelconques de ceux-ci,
e) du verre soluble et/ou du sol de silice, en particulier du verre soluble,
f) au moins un agent mouillant et/ou dispersant et
g) éventuellement au moins un additif,
le matériau de revêtement aqueux présentant un pH dans la plage de 8,5 à 12 ou étant ajusté à un pH dans la plage de 8,5 à 12 et
la teneur en liant acrylate pur (teneur en matières solides), par rapport à la quantité totale de liants organiques, étant supérieure à 60 % en poids.

2. Matériau de revêtement en dispersion aqueuse selon la revendication 1, **caractérisé en ce que**
le deuxième liant organique sur la base d'une dispersion aqueuse est à base de copolymères styrène/acrylate.

3. Matériau de revêtement en dispersion aqueuse selon la revendication 1 ou 2, **caractérisé en ce que**
la teneur en liant acrylate pur (teneur en matières solides), par rapport à la quantité totale de liants organiques, est supérieure à 70 % en poids et de préférence égale ou supérieure à 75 % en poids.

4. Matériau de revêtement en dispersion aqueuse selon l'une des revendications précédentes, **caractérisé en ce que**
la quantité totale de liants organiques est d'au moins 20,0 % en poids (teneur en matières solides) et de préférence d'au moins 24,0 % en poids, à chaque fois par rapport au poids total du matériau de revêtement en dispersion.

5. Matériau de revêtement en dispersion aqueuse selon l'une des revendications précédentes, **caractérisé en ce que**
l'agent d'ajustement du pH est un hydroxyde alcalin, en particulier l'hydroxyde de potassium, et/ou **en ce que**
le composant d) est ou comprend l'alkylsiliconate soluble dans l'eau, en particulier le méthylsiliconate de potassium.

6. Matériau de revêtement en dispersion aqueuse selon l'une des revendications précédentes, comprenant en outre
h) des pigments, en particulier sous la base d'une pâte pigmentaire,
i) des charges,
j) des polyphosphates amorphes, de préférence le polyphosphate de sodium tel que l'hexamétaphosphate de sodium,
k) des stabilisants à base de verre soluble,
l) un solvant et/ou
m) des additifs de surface, en particulier des additifs de surface de silicone, par exemple des siloxanes modifiés par un polyéther, tels que le polyméthylalkylsiloxane modifié par un polyéther, ou des copolymères de polyéther de silicone.

7. Matériau de revêtement en dispersion aqueuse selon la revendication 6, **caractérisé en ce que**
le stabilisant à base de verre soluble comprend un composé d'ammonium quaternaire et/ou un dérivé d'amine,
le dérivé d'amine étant en particulier choisi dans le groupe constitué par l'acide alkylènediaminetétracarboxylique, en particulier l'acide éthylènediaminetétraacétique, les sels de l'acide alkylènediaminetétracarboxylique, en particulier les sels de l'acide éthylènediaminetétraacétique, le tétracarboxylate d'alkylènediamine, en particulier le tétraacétate d'éthylènediamine, la tétraalkylalkylènediamine alcoxylée, en particulier propoxylée, en particulier la tétraalkyléthylènediamine, la tétrahydroxyalkylalkylènediamine, en particulier la N,N,N',N'-tétrakis-(2-hydroxypropyl)-éthylènediamine, la (N,N')-tétraalkylalkylènediamine alcoxylée, en particulier éthoxylée ou propoxylée, en particulier la (N,N')-tétraalkyléthylènediamine, et des mélanges quelconques de ceux-ci.

8. Matériau de revêtement en dispersion aqueuse selon l'une des revendications précédentes, **caractérisé en ce que**
son pH est supérieur ou égal à 9,0, de préférence dans la plage de 10,0 à 12,0 et de manière particulièrement préférée dans la plage de 10,5 à 11,5, ou est ajusté à un pH supérieur ou égal à 9,0, de préférence dans la plage de 10,0 à 12,0 et de manière particulièrement préférée dans la plage de 10,5 à 11,5.

9. Matériau de revêtement en dispersion aqueuse selon l'une des revendications précédentes, **caractérisé en ce que**
celui-ci est essentiellement exempt d'agents de conservation en pot, de préférence exempt d'agents de conservation en pot et de film, et de manière particulièrement préférée exempt d'agents de conservation.

10. Matériau de revêtement en dispersion aqueuse selon l'une des revendications précédentes, contenant
15 à 35 % en poids, de préférence 18 à 30 % en poids et de manière particulièrement préférée 20 à 25 % en poids, de composant a),
0,01 à 1,0 % en poids, de préférence 0,08 à 0,5 % en poids et de manière particulièrement préférée 0,1 à 0,3 % en poids, de composant b),
0,05 à 1,5 % en poids, de préférence 0,1 à 1,0 % en poids et de manière particulièrement préférée 0,2 à 0,5 % en poids, de composant c),
0,05 à 2,0 % en poids, de préférence 0,1 à 1,0 % en poids et de manière particulièrement préférée 0,2 à 0,8 % en poids, de composant d),
0,005 à 4 % en poids, de préférence 0,01 à 2,5 % en poids et de manière particulièrement préférée 0,05 à 1,5 % en poids, de composant e),
0,001 à 2,0 % en poids, de préférence 0,01 à 1,0 % en poids et de manière particulièrement préférée 0,05 à 0,5 % en poids, de composant f),
0,001 à 5 % en poids, de préférence 0,005 à 3,5 % en poids et de manière particulièrement préférée 0,01 à 2,5 % en poids, de composant g),
0 à 25 % en poids, de préférence 1 à 20 % en poids et de manière particulièrement préférée 5 à 15 % en poids, de composant h),
0 à 25 % en poids, de préférence 1 à 20 % en poids et de manière particulièrement préférée 5 à 15 % en poids, de composant i),
0 à 2 % en poids, de préférence 0,001 à 1,5 % en poids et de manière particulièrement préférée 0,1 à 1,0 % en poids, de composant j),
0 à 4 % en poids, de préférence 0,01 à 2,5 % en poids et de manière particulièrement préférée 0,1 à 1,0 % en poids, de composant k),
0 à 10 % en poids, de préférence 0,05 à 5 % en poids et de manière particulièrement préférée 1,0 à 4,0 % en poids, de composant I),
0 à 3 % en poids, de préférence 0,001 à 2,0 % en poids et de manière particulièrement préférée 0,1 à 1,0 % en poids, de composant m), et/ou
40 à 80 % en poids, en particulier 50 à 70 % en poids, d'eau,
les composants formant le matériau de revêtement en dispersion aqueuse se complétant toujours à 100,0 % en poids.

11. Matériau de revêtement en dispersion aqueuse selon l'une des revendications précédentes, **caractérisé en ce que**
celui-ci est un matériau de revêtement en dispersion de pierre de toiture, de pierre de toiture en béton et/ou de tuile, de préférence un matériau de revêtement en dispersion de pierre de toiture en béton.

12. Revêtement obtenu ou pouvant être obtenu
avec le matériau de revêtement en dispersion aqueuse selon l'une des revendications précédentes.

13. Revêtement selon la revendication 12, **caractérisé en ce que** celui-ci est un revêtement de surface de toiture, de préférence un revêtement de pierre de toiture, de pierre de toiture en béton et/ou de tuile et de manière particulièrement préférée un revêtement de pierre de toiture en béton.

14. Revêtement selon la revendication 12 ou 13, **caractérisé en ce que**
celui-ci présente une brillance de la catégorie « brillant » déterminée selon la norme DIN EN ISO 2813:2014 (date de sortie : 2015-02) à un angle de mesure de 60° et classée selon la norme DIN EN 13300 (sortie 11.2002).

15. Substrat revêtu obtenu par
traitement d'un substrat avec le matériau de revêtement en dispersion aqueuse selon l'une des revendications 1 à 11.

16. Substrat revêtu selon la revendication 15, **caractérisé en ce que**
le substrat est une tuile ou une pierre de toiture, en particulier une pierre de toiture en béton.

17. Utilisation du matériau de revêtement en dispersion aqueuse selon l'une des revendications 1 à 11 pour le revêtement ou la rénovation de surfaces de substrat, en particulier de façades de bâtiment ou de surfaces de toiture, de préférence de tuiles et/ou de pierres de toiture, en particulier de pierres de toiture en béton, de manière particulièrement préférée de pierres de toiture en béton.

18. Procédé de revêtement de surfaces de substrat, de préférence de façades de bâtiment ou de surfaces de toiture, de manière particulièrement préférée de tuiles ou de pierres de toiture, en particulier de pierres de toiture en béton, comprenant les étapes
i) mise à disposition d'un matériau de revêtement en dispersion aqueuse selon l'une des revendications 1 à 11,
ii) mise à disposition d'un substrat avec une surface pouvant être revêtue et
iii) application du matériau de revêtement en dispersion aqueuse sur la surface pouvant être revêtue du substrat, en particulier au moyen d'un pulvérisateur sans air.
